Europäisches Patentamt

(19) European Patent Office

Office européen des brevets

(11) Publication number: **0 311 026 B1**

# EUROPEAN PATENT SPECIFICATION

(12)

(45) Date of publication of patent specification :
**17.07.91 Bulletin 91/29**

(51) Int. Cl.[5] : **F16F 9/30, F16C 11/10, B64G 1/44, B64G 9/00**

(21) Application number : **88116429.7**

(22) Date of filing : **05.10.88**

(54) Rate controllable damping mechanism.

(30) Priority : **08.10.87 US 105838**

(43) Date of publication of application :
**12.04.89 Bulletin 89/15**

(45) Publication of the grant of the patent :
**17.07.91 Bulletin 91/29**

(84) Designated Contracting States :
**DE FR GB IT**

(56) References cited :
EP-A- 0 126 671
EP-A- 0 140 738
DE-A- 1 813 849
FR-A- 1 562 514
US-A- 3 285 400

(73) Proprietor : **Hughes Aircraft Company
7200 Hughes Terrace P.O. Box 45066
Los Angeles, California 90045-0066 (US)**

(72) Inventor : **Ludwig, Howard R.
6911 Beechfield Drive
Rancho Palos Verdes California 90274 (US)**
Inventor : **Yuan, Mark S.C.
18341 Mt. Waterman Street
Fountain Valley California 92708 (US)**
Inventor : **Haidler, John W.
1536 Ravenna Avenue
Wilmington California 90744 (US)**
Inventor : **Elson, Robert J.
605 West 40th Street
San Pedro California 90731 (US)**

(74) Representative : **Witte, Alexander, Dr.-Ing.
Witte, Weller & Hilgenfeldt Patent- und
Rechtsanwälte Augustenstrasse 7
W-7000 Stuttgart 1 (DE)**

## Description

The invention relates to an improved damping and strain relief mechanism.

Further, the invention relates to a method for structural stress relief, using the improved damping and strain relief mechanism.

As is well known, conventional rotary damping mechanisms employ a paddle mounted on a shaft for movement within a chamber filled with a damping fluid. As the shaft is rotated within the housing, the fluid flows from one side of the paddle to the other through a small gap between the paddle and the housing. This action provides a damping force proportional to velocity and hence the rate of deployment can be limited.

A damping and deployment mechanism is typically a damping mechanism fitted with an actuator, typically a spring, and a latch. Thus, the spring provides the actuation force which is damped by the damping mechanism. The damping and deployment mechanism will experience a controlled motion to the end of travel at which time the latches will engage and hold the mechanism in its deployed position.

From DE-A-1 813 849 a remote-controlled and continuously electrically excitable hydraulic damping mechanism is known. The mechanism uses a cylindrical housing with a piston running in an axial direction therein. A small gap is provided between the circumferential cylindrical piston surface and the internal cylinder housing. The cylinder housing is filled with a damping fluid on both axial sides of the piston. Further, the piston is provided with a magnetic excitation coil which may be excited externally in any concievable manner. Particularly, the damping fluid is selected as being a thixotropic material, i.e. a material, the viscosity of which may be varied between very low values and very high values depending on mechanical stress being exerted on the material. In order to exert such mechanical stress on the thixotropic damping fluid, magnetic particles are embedded therein to cooperate with the magnetic field, generated by the magnetic coil provided within the piston. Therefore, according to DE-A-1 813 849, a remote-controlled electrical setting of the damping fluid viscosity shall be possible.

However, it seems that the described prior art device is inoperable, because, as is well-known to the person of ordinary skill, the magnetic force, exerted by a magnetic field on a magnetic element, is proportional to the square value of the prevailing magnetic induction and, hence, independent of its polarity. Therefore, even if the prior art piston magnetic coil were excited with an alternating current, the magnetic particles, embedded in the thixotropic damping fluid, would simply be attracted by the magnetic coil but not perform any oscillating motion which would be necessary to stir the thixotropic fluid in order to lower its viscosity.

Therefore, the damping mechanism as described in DE-A-1 813 849 can be no basis for a realistic approach, because it simply does not work.

Further, in US-A-3 285 400, an apparatus for protecting a delicate mechanism against adverse environmental conditions is described using a rigid casing enclosing the mechanism for transporting same to its operating side. For protection purposes, the remaining space in the casing is filled with a potting compound completely occupying the space within the casing not taken by the mechanism. The potting compound is sublimeable with a melting temperature being lower than the ambient temperature such that the delicate mechanism is secured within the housing with the potting compound being in its solid state. As soon as the transportation is terminated, a heating mechanism, being provided in the casing, is activated in order to increase the temperature within the casing above the potting compound melting temperature. Thus, the potting compound is sublimed and can be discharged from the casing, thus rendering the delicate mechanism operable again.

However, this prior art mechanism serves an entirely different object as is the case in the present invention since it shall protect a delicate mechanism against adverse environmental conditions, and, further, the potting compound has to be filled into the casing in its liquid state and, further, to be discharged again in its liquid state after the job has been performed. There is no indication in connection with this prior art that one should take advantage of the change between the solid state and the liquid state in order to allow operational movements of apparatus elements.

FR-A-1 562 514 describes a damping mechanism, being also of the piston-and-cylinder type and using a damping liquid. During operation of this prior art mechanism, fluid temperature varies due to operational mechanical stress exerted on the fluid. Therefore, as soon as temperature varies, fluid viscosity varies, too. In order to compensate for such viscosity variations which affect the damping characteristics, a mechanism is provided for changing the effective cross-section of an aperture controlling the exchange of damping fluids between two damping chambers.

Therefore, this prior art mechanism only calls for compensating measures in order to care for viscosity variations which occur due to the standard operational conditions.

EP-A-0 126 671 describes a flexible fixation element that is to be used on the surface of a spacecraft for mounting a payload thereto. The specific fixation element used consists of a cross-bar-type damping element arranged between two housing halves such that a damping effect is achieved within three orthogonal coordinate directions. However, the damping characteristics of this element are constant and cannot be varied at all by remote control means.

Further, EP-A-0 140 738 describes an actuating mechanism for the deployment of spacecraft devices like antennas and the like. The mechanism uses control means for controlling the velocity of a displacement element and, more particularly, control means using an actuating fluid passing through an orifice under appropriate pressure. By periodically inverting the direction of fluid within the orifice for a predetermined number of times, a precise setting of the displacement element shall be achieved.

However, this prior art actuating mechanism is very complicated in its structure and, further, a complicated control is necessary also for end-positions of displacement.

Considering general damping mechanisms, such mechanisms unfortunately typically have several shortcomings of which the leakage of damping fluid is but one example. In many applications, leakage of damping fluid may be tolerated ; however, in certain more demanding applications, this leakage may be problematic. For example, in space and other remote environments, leakage of fluid from a damping mechanism in a deployment system may cause enough damage to impact on the success or failure of the mission. That is, the leakage may reduce the damping capacity of the mechanism and allow a substantial force to be applied to the spacecraft structure, due to increased impact velocities, causing breakage of and damage to critical system components. This may also lead to contamination of adjacent spacecraft components. Thus, durable, reliable operation of such damping and deployment mechanisms is often the design objective of high priority as maintenance, repair, and replacement may be quite costly or impossible.

Another typical shortcoming of conventional damping and deployment mechanisms is that the mechanism is typically constrained to latch in a fixed position. In some applications, there is a need to latch, albeit temporarily, in some intermediate position. Thus, variable latching, the capability to latch in any position within the range of movement of the deployment arm, is deemed to be desirable.

Further, there is typically no provision for varying the rate of deployment of structures using conventional deployment mechanisms. It is considered to be desirable that the rate and degree of deployment be controlled.

This would permit the use of more powerful actuators (heavier springs) and still control the deployment rate.

Also, conventional damping mechanisms do not add to the stiffness of the deployed systems. That is, once the deployment is complete, only a latch prevents the joint from becoming fluid again. It would be advantageous to provide a stronger joint than is typically characteristic in a simple latch.

Further, conventional systems are gap dependent. That is, the damping rate is typically a function of the gap between the paddle and the walls of the chamber through which the fluid must flow. The need to control the dimensions of these gaps adds significantly to the cost of manufacture of conventional deployment mechanisms.

There is, therefore, a need in the art for a simple, low cost improved damping and deployment mechanism that is less likely to leak ; offers variable latching; is rate controllable ; is load independent ; and adds to the stiffness of the deployed system.

According to the mechanism mentioned at the outset, this object is achieved by :
  – a first movable part ;
  – a second movable part, arranged for relative movement between said first and said second movable part ;
  – a chamber disposed between said first and said second movable parts ;
  – a damping material disposed within said chamber for preventing said relative movement between said first and said second movable parts at a first temperature and for damping said relative movements between said first and said second movable parts at a second temperature ; and
  – temperature setting means for selectively changing the temperature of said damping material from said first temperature to said second temperature.

According to the method, mentioned at the outset, the object is achieved by the steps of :

a)     mounting a structure on a support through a plurality of said mechanisms ;
b)     exposing said structure to strain forces ; and
c)     activating said temperature setting means of each relief mechanism to allow the structure to relax under the strain forces.

Illustrative embodiments and exemplary applications will now be described with reference to the accompanying drawings, in which :
    Fig. 1(a) shows a side view, partially in section, of a damping mechanism constructed in accordance with the teachings of the present invention in a first predeployment position.
    Fig. 1(b) shows a side view, partially in section, of the damping mechanism of Fig. 1(a) in a partially deployed position.
    Fig. 2(a) shows a front view of the damping mechanism of Fig. 1(a) in the partially deployed position.
    Fig. 2(b) shows a side elevational view of the damping mechanism of Fig. 2(a) with the predeployed position in phantom lines.
    Fig. 3 shows an illustrative application of a strain relief mechanism constructed in accordance with the teachings of the present invention.

Fig. 4 shows a sectional side view of a strain relief mechanism constructed in accordance with the teachings of the present invention.

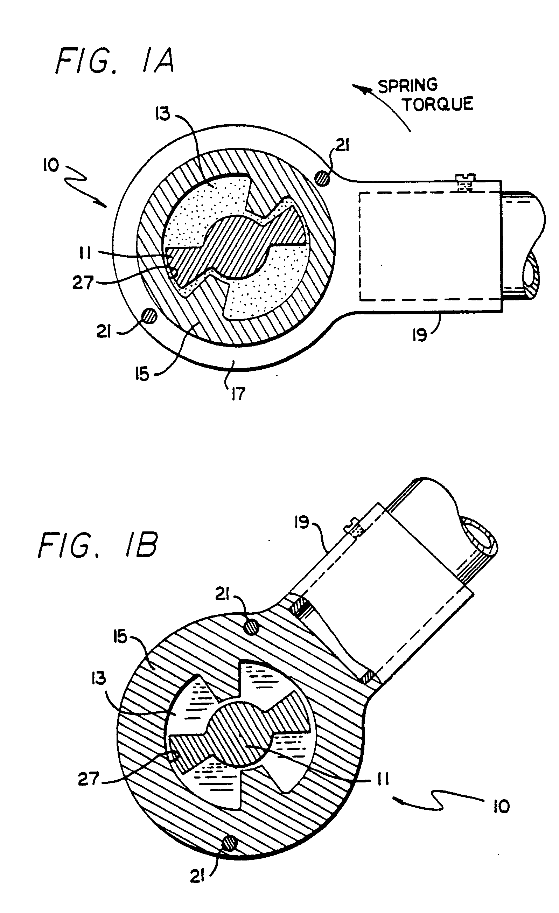

Figs. 1(a) and 1(b) show partial sectional side views of a rate controllable damping mechanism 10 constructed in accordance with the teachings of the invention. Fig. 1(a) shows the mechanism 10 in a pre-deployment or stowed position and Fig. 1(b) shows the mechanism 10 in a deployed position. Although, as discussed below, the mechanism 10 of Figs. 1(a) and 1(b) is adapted for angular rotation, it will be understood that the teaching of the present invention is equally applicable to damping mechanisms employing translational motion. The mechanism 10 of the present invention includes a stator or paddle wheel 11 mounted for relative rotational motion within a chamber filled with a low temperature melting metal alloy 13 such as "Cerrobend" provided by Cerro Metal Products Corporation of Bellefonte Pennsylvania. As discussed below, and not shown in Fig. 1(a) or (b), the stator 11 is attached to a housing which is in turn attached to a frame. A rotor 15 surrounds the chamber and is attached to a hub 17 which, in turn, is attached to a shaft 19. A rod or coil of the heating element 21 are fixed in the hub 17, although it will be recognized by those skilled in the art that the heating element 21 could be placed in other suitable locations. It is also understood that any suitable heating element or mechanism may be used without departing from the scope of the invention.

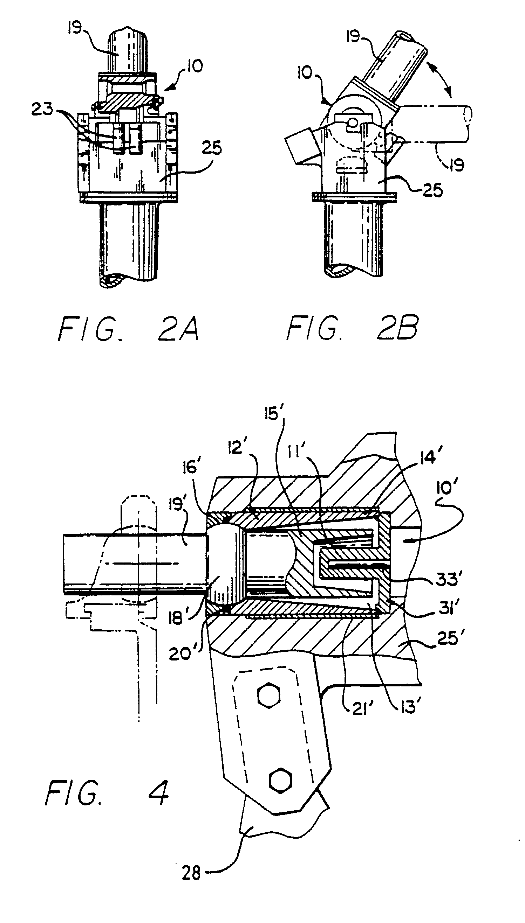

The selective activation of the heating element 21 provides control of the rate of actuation (or deployment) and of the latching position. When the heating element 21 is activated and the alloy 13 reaches its melting point, redundant springs 23, shown in the front view of Fig. 2 (a) and positioned between the shaft 19 and the frame 25, move the shaft 19 from the stowed position of Fig. 1(a) to the deployed position of Fig. 1(b). See also Fig. 2(b). As the stator 11 and the rotor 15 undergo relative rotation, the molten metal flows from one side of the stator 11 to the other side through a gap 27 between the stator 11 and the rotor 15 as shown in Fig. 1 (a). The present invention thus provides damped actuation at a rate which may be controlled electrically from a remote location. Further, since the metal in its solid state contributes to the overall stiffness of the deployed mechanism, the invention allows for the use of a smaller joint to achieve the same degree of stiffness.

Since the damping is not based on viscosity and gap size, the present invention is gap independent relative to the prior art. That is, the gap size of the present invention is not critical with respect to damping rate. Fabrication is simplified as the gaps need not be machined with the precision necessitated by prior art designs.

While these considerations simplify the design and manufacture of the present invention, it will be recognized that one of the principal advantages of the present invention is that it is not subject to leakage. No fluid is present in the chamber until the alloy 13 is liquified by heating. At which time, if any leakage occurs, the escaping liquid will solidify when exposed to the external environment and will not spread and contaminate adjacent components as fluid. The advantageous features mentioned above presume that the actuator is otherwise designed within the level of skill in the art vis-a-vis the intended operational environment.

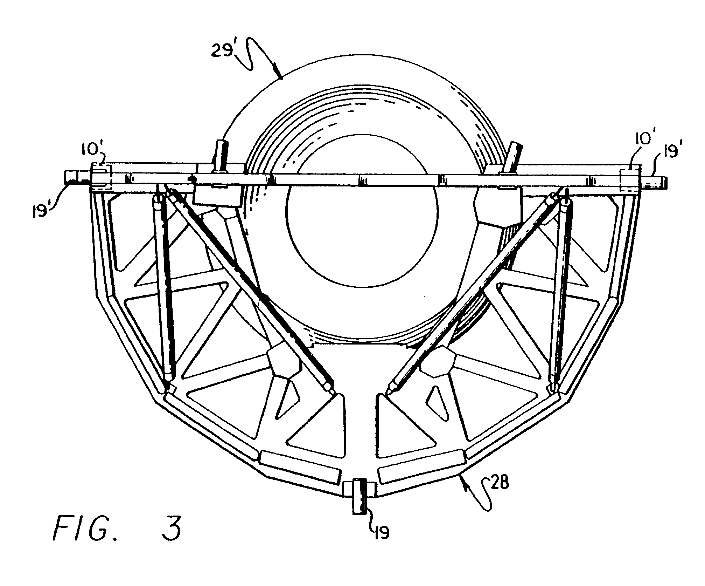

Figs. 3 and 4 illustrate a novel application employing the teachings of the present invention. In this application, one or more strain relief mechanisms 10′, constructed in accordance with the teachings of the present invention, are strategically positioned in a spacecraft cradle 28. The cradle 28 supports a satellite payload 29′. The strain relief mechanism 10′ is shown in detail in the partial sectional view of Fig. 4. In this embodiment, the mechanism 10′, shown in section, includes a substantially cylindrical housing 12′ which is surrounded by a heating element 21′ and secured within a frame 25′. The housing has a flared contour 14′ at one end and a socket 16′ at the other. The socket 16′ provides a seat for the ball 18′ on the shaft 19′. The socket is fitted with an O-ring seal 20′. The flared end of the housing 12′ provides a chamber into which one end of the shaft 19′ extends. The end of the shaft 19′ is a rotor or paddle 15′. The paddle 15′ is hollowed to receive the stator 11′ which in this embodiment is a protusion from a housing end cap 31′. The other end of the shaft is attached to the transport vehicle, e.g. the shuttle. The end cap 31′ is fastened to the housing 12′. A thermostat 33′, embedded in the stator 11′, regulates the heater 21′. The chamber is filled with the low melting temperature metal alloy 13′, or other suitable material, as discussed above. Each mechanism 10′ is secured within the frame 25′ which is a part of the cradle 28.

With the exception of the springs 23, the operation of each strain relief mechanism 10′ is substantially identical to that described above with reference to the illustrative embodiment 10 of Figs. 1 and 2. That is, the activation of the heating element 21′ melts the alloy 13′ and allows movement of the paddle 15′ relative to the housing 12′.

The novel technique for structural stress relief afforded by the present invention may now be described with reference to the illustrative application of Fig. 3. It will be understood that the invention may be applied to any structure by those of ordinary skill in the art. The first step in the method has already been taken with respect to the cradle of Fig. 3, that is, the structure is fitted with a plurality of stress relief mechanisms 10′ at selected support positions. Initially, the heating elements 21′ are off so that the metal alloys 13′ of each mechanism are solidified. The structure is next exposed to internal and external forces which provide steady state and perhaps transient stresses and strains on the structure. In the case of the cradle, this means launching the shuttle and exposing the cradle to the launching and space environment. Next, the heating elements 21' of each mechanism 10' are energized. When the alloys 13' melt, the structure relaxes and the strains are relieved. Finally, the heating elements 21' are deactivated and the alloys solidify to provide rigid supports. In the illustrative application, the payload satellite may then be ejected from the cradle 28.

The invention is not limited to the design of the rotor and stator nor that of the paddle and chamber. Nor is the invention limited to the type, shape, or location of the heating element. The invention is not limited to the material used as a damping fluid so long as it melts and freezes (or fuses and solidifies) within the designed operating temperatures. The invention is not limited to the means used to actuate the deployment mechanism 10. In fact, the relief mechanism 10' illustrates that no actuating mechanism is required.

## Claims

1. A damping and strain relief mechanism (10'), comprising :
    – a first movable part (11, 11') ;
    – a second movable part (15, 15'), arranged for relative movement between said first and said second movable part (11, 11' ; 15, 15') ;
    – a chamber disposed between said first and said second movable parts (11, 11' ; 15, 15') ;
    – a damping material (13) disposed within said chamber for preventing said relative movement between said first and said second movable parts (11, 11', 15, 15') at a first temperature and for damping said relative movements between said first and said second movable parts (11, 11' ; 15, 15') at a second temperature ; and
    – temperature setting means (21, 21') for selectively changing the temperature of said damping material (13) from said first temperature to said second temperature.

2. The mechanism (10) of claim 1, characterized in that said chamber is disposed within a housing (12') ;
    – said second movable part (15, 15') comprises paddle means (15') mounted for movement within said chamber ; and
    – said temperature setting means (21, 21') comprise heating means (21') for selectively increasing the temperature of said damping material (13) from said first temperature to said second temperature, said first temperature being below the melting point of said damping material and said second temperature being close to said melting point of said damping material (13).

3. The mechanism of claim 1 or 2, characterized by said damping material (13) being a low melting temperature metal alloy (13, 13').

4. The mechanism of any of claims 1 through 3, characterized by said heating means (21') or said temperature setting means (21, 21') being an electrical heater (21').

5. The mechanism of any of claims 1 through 3, characterized by means (23) for actuating said movement.

6. A method for structural stress relief, using the mechanism (10, 10') of any of claims 1 through 5, comprising the steps of :

a)     mounting a structure on a support through a plurality of said mechanisms (10, 10') ;
b)     exposing said structure to strain forces ; and
c)     activating said temperature setting means (21, 21') of each relief mechanism (10, 10') to allow the structure to relax under the strain forces.

7. The method of claim 6, wherein said structure is a spacecraft cradle (28) and said support is part of a transport vehicle, comprising the additional steps of :

a)     launching a transport with said cradle (28) and a satellite within said cradle (28) as a payload (29') of said transport ;
b)     activating said temperature setting means (21, 21') of each relief mechanism (10, 10') to allow said cradl (28) to relax ; and
c)     ejecting said satellite from said cradle (28).

## Patentansprüche

1. Mechanismus zum Dämpfen sowie zur Entlastung einer Spannung mit :
    – einem ersten bewegbaren Teil (11, 11') ;
    – einem zweiten bewegbaren Teil (15, 15'), das zum Zwecke einer Relativbewegung zwischen dem ersten und dem zweiten bewegbaren Teil (11, 11', 15, 15') angeordnet ist ;
    – einer Kammer, die zwischen dem ersten und dem zweiten bewegbaren Teil (11, 11' ; 15, 15') angeordnet ist ;
    – einem Dämpfungsmaterial (13), das in der Kammer vorhanden ist, um die Relativbewegung zwischen dem ersten und dem zweiten bewegbaren Teil (11, 11' ; 15, 15') bei einer ersten Temperatur zu verhindern und die Relativbewegung zwischen dem ersten und dem zweiten bewegbaren Teil (11, 11', 15, 15') bei einer zweiten Temperatur zu dämpfen ; und
    – Temperatur-Einstellmitteln (21, 21'), um die Temperatur des Dämpfungsmaterials (13) selektiv von der ersten Temperatur in die zweite Temperatur zu ändern.

2. Mechanismus (10) nach Anspruch 1, dadurch gekennzeichnet, daß die Kammer in einem Gehäuse (12') angeordnet ist ; wobei

– das zweite bewegbare Teil (15, 15') Paddel-Mittel (15') umfaßt, die zum Zwecke der Bewegung in der Kammer angeordnet sind ; und

– die Temperatur-Einstellmittel (21, 21') Heizmittel (21') umfassen, um die Temperatur des Dämpfungsmaterials (13) selektiv von der ersten Temperatur auf die zweite Temperatur zu erhöhen, wobei die erste Temperatur unterhalb des Schmelzpunktes des Dämpfungsmaterials und die zweite Temperatur in der Nähe des Schmelzpunktes des Dämpfungsmaterials (13) liegt.

3. Mechanismus nach Anspruch 1 oder 2, dadurch gekennzeichnet, daß das Dämpfungsmaterial (13) eine Metallegierung (13, 13') mit niedrigem Schmelzpunkt ist.

4. Mechanismus nach einem der Ansprüche 1 bis 3, dadurch gekznnzeichnet, daß die Heizmittel (21') oder die Temperatur-Einstellmittel (21, 21') als elektrische Heizung (21') ausgebildet sind.

5. Mechanismus nach einem der Ansprüche 1 bis 3, gekennzeichnet durch Mittel (23) zum Auslösen der Bewegung.

6. Verfahren zum Entlasten einer strukturellen Anspannung unter Verwendung des Mechanismus (10, 10') nach einem der Ansprüche 1 bis 5, umfassend die Schritte :

a) Befestigen einer Struktur auf einer Tragkonstruktion mittels einer Mehrzahl der Mechanismen (10, 10') ;

b) Beaufschlagen der Struktur mit Spannungskräften ; und

c) Auslösen der Temperatur-Einstellmittel (21, 21') eines jeden der Spannungsmechanismen (10, 10'), um eine Entspannung der Struktur von den Spannungskräften zu ermöglichen.

7. Verfahren nach Anspruch 6, bei dem die Struktur ein Gerüst (28) für ein Raumfahrzeug und die Tragkonstruktion ein Teil eines Transportfahrzeugs ist, umfassend die zusätzlichen Schritte :

a) Starten eines Transportes mit dem Gerüst (28) und einem Satelliten innerhalb des Gerüstes (28) als Transportlast (29') des Transportes ;

b) Auslösen der Temperatur-Einstellmittel (21, 21') der Entspannungsmechanismen (10, 10'), um die Entspannung des Gerüstes (28) zu ermöglichen ; und

c) Ausstoßen des Satelliten von dem Gerüst (28).

**Revendications**

1. Mécanisme (10') d'amortissement et de soulagement de contrainte, comportant :

– une première partie mobile (11, 11') ;

– une seconde partie mobile (15, 15') disposée pour permettre un mouvement relatif entre lesdites première et seconde parties mobiles (11, 11' ; 15, 15') ;

– une chambre disposée entre lesdites première et seconde parties mobiles (11, 11' ; 15, 15') ;

– une matière d'amortissement (13) disposée à l'intérieur de ladite chambre afin d'empêcher ledit mouvement relatif entre lesdites première et seconde parties mobiles (11, 11', 15, 15') à une première température et pour amortir lesdits mouvements relatifs entre lesdites première et seconde parties mobiles (11, 11' ; 15, 15') à une seconde température ; et

– des moyens (21, 21') de réglage de température destinés à modifier sélectivement la température de ladite matière d'amortissement (13) de ladite première température à ladite seconde température.

2. Mécanisme (10) selon la revendication 1, caractérisé en ce que ladite chambre est disposée à l'intérieur d'un corps (12') ;

– ladite seconde partie mobile (15, 15') comprend un moyen à palette (15') monté de façon à se déplacer à l'intérieur de ladite chambre ; et

– lesdits moyens (21, 21') de réglage de température comprennent un moyen chauffant (21') destiné à élever sélectivement la température de ladite matière d'amortissement (13) de ladite première température à ladite seconde température, ladite première température étant au-dessous du point de fusion de ladite matière d'amortissement, et ladite seconde température étant proche dudit point de fusion de ladite matière d'amortissement (13).

3. Mécanisme selon la revendication 1 ou 2, caractérisé en ce que ladite matière d'amortissement (13) est un alliage métallique (13, 13') à basse température de fusion.

4. Mécanisme selon l'une quelconque des revendications 1 à 3, caractérisé en ce que ledit moyen chauffant (21') ou lesdits moyens (21, 21') de réglage de température comprennent un élément chauffant électrique (21').

5. Mécanisme selon l'une quelconque des revendications 1 à 3, caractérisé par des moyens (23) destinés à actionner ledit mouvement.

6. Procédé de soulagement d'efforts structuraux, utilisant le mécanisme (10, 10') de l'une quelconque des revendications 1 à 5, comprenant les étapes qui consistent :

a) à monter une structure sur un support par l'intermédiaire de plusieurs desdits mécanismes (10, 10') ;

b) à exposer ladite structure à des forces de déformation ; et

c) à activer lesdits moyens (21, 21') de réglage de température de chaque mécanisme (10, 10') de soulagement pour permettre à la structure de se relâcher sous les forces de déformation.

7. Procédé selon la revendication 6, dans lequel ladite structure est un berceau (28) d'engin spatial et ledit support est une partie d'un véhicule de transport, comprenant les étapes supplémentaires qui consistent :

a) à lancer un moyen de transport avec ledit berceau (28) et un satellite dans ledit berceau (28) en tant que charge utile (29') dudit moyen de transport ;

b) à activer lesdits moyens (21, 21') de réglage de température de chaque mécanisme de soulagement (10, 10') pour permettre audit berceau (28) de se relaxer ; et

c) à éjecter ledit satellite dudit berceau (28).

FIG. IA

SPRING TORQUE

FIG. IB

FIG. 2A    FIG. 2B

FIG. 4

FIG. 3

EP 0 311 026 B1